# EUROPEAN PATENT SPECIFICATION

(11) **EP 3 032 120 B1**
(45) Date of publication and mention of the grant of the patent: **14.11.2018**
(21) Application number: 14835238.8
(22) Date of filing: 25.07.2014
(51) Int. Cl.: F16B 41/00, F16B 23/00, F16B 31/02, F16B 35/00, F16B 37/00

(54) **SCREW SET**
SCHRAUBENSET
ENSEMBLE VIS

(30) Priority: 05.08.2013 JP 2013162501
(43) Date of publication of application: 15.06.2016
(73) Proprietor: Nabeya Bi-Tech Kabushiki Kaisha, Seki-shi, Gifu 501-3939 (JP)
(72) Inventor: KANEDA, Mitsuo, Seki-shi Gifu 501-3939 (JP); UEMORI, Kenji, Seki-shi Gifu 501-3939 (JP); FUJIKAWA, Yoshimi, Seki-shi Gifu 501-3939 (JP)
(74) Representative: AWA Sweden AB
(86) International application number: PCT/JP2014/069717
(87) International publication number: WO 2015/019872

(56) References cited:
- JP-A- 2009 108 934
- JP-A- 2009 108 934
- JP-A- 2009 275 714
- JP-U- 3 069 163
- JP-U- S5 632 118
- US-A1- 2007 092 352

## Description

### TECHNICAL FIELD

The present invention relates to a screw set capable of fixing two members in an anti-theft state.

### BACKGROUND ART

This type of anti-theft technique is disclosed in patent document 1. According to the conventional technique disclosed in the document, a first member is first mounted on a second member. Next, a bolt or a nut is tightened from an upper surface of the first member to fix the first member on the second member. Thereafter a cap-shaped anti-theft implement made of synthetic resin is placed over and attached onto a head of the bolt or the nut with the first member fixed on the second member. Such anti-theft implement is formed to a cylindrical shape. Thus, the bolt or the nut cannot be rotated using a tool.

In the conventional anti-theft method described above, the first member is fixed on the second member with the bolt or the nut, and thereafter, the anti-theft implement needs to be attached onto the head of the bolt or the nut by hammering. Thus, the work of fixing the first member on the second member is cumbersome and requires time.

JP2009108934 discloses a bolt which is to fix a fuse box to a bracket, and a shark part is provided in substantially central place of an axial part. A first male thread is formed in the axial part of the one way side than the shark part, and a second male thread is formed in the axial part of the other side and both male threads are formed in the same rotative direction and the first male thread is a male thread to tighten up the fuse box to the bracket and in the second male thread side of the shark part, a collar to obscure an incomplete thread of the shark part side in the second male thread is fixed.

### Prior Art Documents

### Patent Documents

Patent Document 1: Japanese Laid-Open Patent Publication No. 2012-241340

### DISCLOSURE OF THE INVENTION

### PROBLEMS THAT THE INVENTION IS TO SOLVE

It is an object of the present invention to provide a screw set that can easily fix two members in an anti-theft state.

### MEANS FOR SOLVING THE PROBLEM

In order to solve such problem, according to a first aspect of the present invention, a screw set includes a screw body having a fixing threaded portion and a nut screw fitted to a male threaded portion formed on an outer peripheral surface of the screw body. At least one of the male threaded portion or a female threaded portion of the nut includes a sliding means such that a screw fitting force of the male threaded portion and the female threaded portion is weaker than a screw fitting force in the fixing threaded portion. The sliding means includes a fluorine coating or another material having low friction coefficient and lubricating property such as molybdenum dioxide, lubricating oil.

According to such configuration, the female threaded portion of the nut is screw fitted to the male threaded portion of the screw body when using the screw set. The general purpose tool is then engaged with the nut to tighten the nut with the screw body and the nut integrated, so that the fixing threaded portion of the screw body is tightened to the fixing bolt or the fixing nut. Thus, the two members can be easily fixed. In this state, the screw fitting force between the male threaded portion of the screw body and the female threaded portion of the nut is weaker than the screw fitting force of the fixing threaded portion with respect to the fixing bolt or the fixing nut. Therefore, even if the general purpose tool is engaged with the nut to loosen the entire screw set, the nut is merely loosened with respect to the screw body, and the tightened state of the fixing threaded portion with respect to the fixing bolt or the fixing nut is maintained. That is, one of the two fixed members can be prevented from being detached and stolen with a simple configuration.

### BRIEF DESCRIPTION OF THE DRAWINGS

Fig. 1 is a perspective view showing a female screw set of a first embodiment of the present invention.
Fig. 2 is an exploded perspective view of the female screw set.
Fig. 3 is a cross-sectional view showing a usage state of the female screw set.
Fig. 4 is a perspective view showing a male screw set of a second embodiment of the present invention.
Fig. 5 is an exploded perspective view of the male screw set.
Fig. 6 is a cross-sectional view showing a usage state of the male screw set.
Fig. 7 is a perspective view showing a variant.
Fig. 8 is a cross-sectional view of the variant.
Fig. 9 is a cross-sectional view showing another variant.
Fig. 10 is a cross-sectional view showing another further variant.

### MODE FOR CARRYING OUT THE INVENTION

### (First Embodiment)

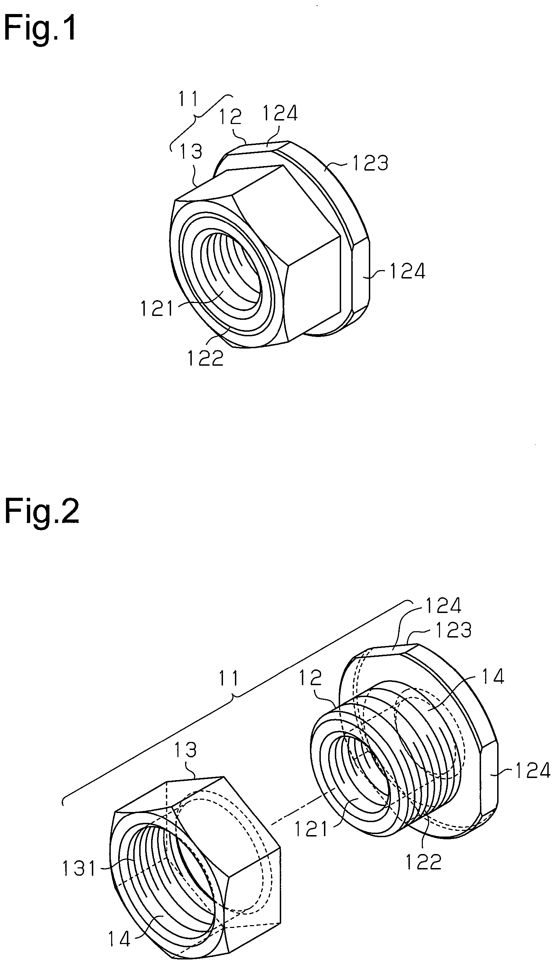

A first embodiment in which a screw set of the present invention is embodied in a female screw set will now be described with reference to Figs. 1 to 3.

As shown in Figs. 1 and 2, a female screw set 11 includes a screw body 12 and a nut 13. The nut 13 is formed to a hexagonal shape so that a general purpose tool such as a wrench can be used. A fixing threaded portion 121 including a female screw is formed at the center of the screw body 12. A male threaded portion 122 is formed on an outer peripheral surface of the screw body 12. The male threaded portion 122 is screw-fitted to a female threaded portion 131 of the nut 13. A flange 123 is formed at an end edge of the screw body 12. The flange 123 has a shape corresponding to a dedicated tool. In the first embodiment, three planar portions 124 are formed on the outer peripheral surface of the flange 123 to enable the use of a dedicated tool. The female screw set 11 is distributed to the market with the nut 13 screw fitted to the male threaded portion 122 of the screw body 12.

At least one of the male threaded portion 122 or the female threaded portion 131 includes a sliding structure 14 serving as a sliding means such that a screw-fitting force of the male threaded portion 122 and the female threaded portion 131 is weaker than a screw-fitting force in the fixing threaded portion 121. In the first embodiment, the sliding structure 14 is formed only in the nut 13. The sliding structure 14 includes a fluorine coating.

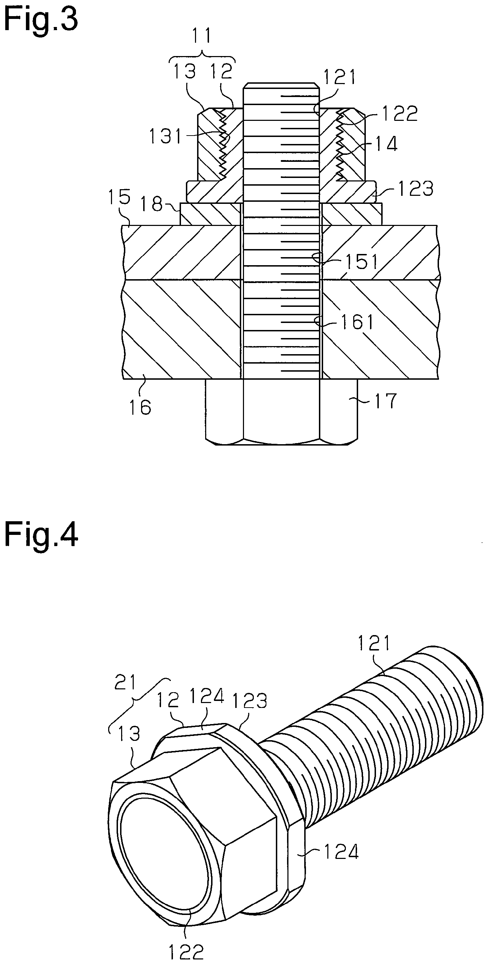

The usage method of the female screw set 11 will now be described with reference to Fig. 3.

Fig. 3 shows a state in which a first member 15 such as a solar battery panel, and the like is fixed on a second member 16 using the female screw set 11. In this case, the first member 15 is first mounted on the second member 16. Next, a fixing bolt 17 is inserted to a bolt insertion hole 161 of the second member 16 and a bolt insertion hole 151 of the first member 15 from the lower surface of the second member 16. Then, a washer 18 is fitted to the distal end of the fixing bolt 17 with the first member 15 fixed on the second member 16, and the female screw set 11 is screw fitted to the distal end of the fixing bolt 17. The attachment of the washer 18 and the female screw set 11 is carried out above the first member 15. The washer 18 may not be used. At this stage, the male threaded portion 122 of the screw body 12 and the female threaded portion 131 of the nut 13 are screw fitted in advance. The screw body 12 and the nut 13 of the female screw set 11 are thereby integrated. The general purpose tool is then engaged with the nut 13 to tighten the nut 13, so that the fixing threaded portion 121 of the screw body 12 is tightened to the fixing bolt 17. The first member 15 is fixed to the second member 16 in such a manner.

In this state, the screw fitting force of the male threaded portion 122 of the screw body 12 and the female threaded portion 131 of the nut 13 is made weaker than the screw fitting force of the fixing threaded portion 121 with respect to the fixing bolt 17 by the sliding structure 14. Thus, even if the general purpose tool is engaged with the nut 13 to loosen the entire female screw set 11, the nut 13 is merely loosened with respect to the screw body 12, and the tightened state of the fixing threaded portion 121 with respect to the fixing bolt 17 is maintained. The female screw set 11 thus cannot be detached from the fixing bolt 17. The first member 15 thus can be prevented from being stolen.

When performing maintenance and check on the first member 15, the dedicated tool is to be engaged with the flange 123 of the screw body 12 to rotatably operate the same. The tightening of the fixing threaded portion 121 with respect to the fixing bolt 17 thus can be loosened, and the first member 15 can be detached from the second member 16.

Therefore, the first embodiment has the following effects.
(1) The female screw set 11 includes the screw body 12 and the nut 13. The screw body 12 includes the fixing threaded portion 121. The male threaded portion 122, to which the female threaded portion 131 of the nut 13 is screw fitted, is formed on the outer peripheral surface of the screw body 12. The flange 123 is formed on the screw body 12. The flange 123 has a shape corresponding to the dedicated tool. At least one of the male threaded portion 122 or the female threaded portion 131 includes the sliding structure 14 such that the screw-fitting force of the male threaded portion 122 and the female threaded portion 131 is weaker than the screw-fitting force in the fixing threaded portion 121.
   According to such configuration, the fixing threaded portion 121 of the screw body 12 is tightened to the fixing bolt 17 by engaging the general purpose tool to the nut 13 and tightening the nut 13 with the screw body 12 and the nut 13 in the integrated state. Thus, the first member 15 is easily fixed with respect to the second member 16. In such a state, the screw-fitting force of the male threaded portion 122 of the screw body 12 and the female threaded portion 131 of the nut 13 is made weaker than the screw-fitting force of the fixing threaded portion 121 with respect to the fixing bolt 17 by the sliding structure 14. Thus, even when attempting to loosen the entire female screw set 11 using the general purpose tool, the nut 13 is merely loosened with respect to the screw body 12. Thus, according to the female screw set 11 of the first embodiment, the first member 15 is easily fixed with respect to the second member 16, and the first member 15 is prevented from being stolen with a simple configuration.
(2) The sliding structure 14 includes a fluorine coating. Thus, the number of components configuring the female screw set 11 is not increased. That is, the screw-fitting force of the male threaded portion 122 and the female threaded portion 131 is made weaker than the screw-fitting force of the fixing threaded portion 121 with respect to the fixing bolt 17 with a simple configuration.

### (Second Embodiment)

A second embodiment in which the screw set of the present invention is embodied in the male screw set 21 will now be described with reference to Figs. 4 to 6. In the second embodiment, the detailed description on the portions similar to the first embodiment will be omitted.

As shown in Figs. 4 to 6, the male screw set 21 includes the screw body 12 and the nut 13. The screw body 12 includes the fixing threaded portion 121 including a male screw. The screw body 12 includes the male threaded portion 122, to which the female threaded portion 131 of the nut 13 is screw fitted, on an opposite side of the fixing threaded portion 121. The screw body 12 has a flange 123 between the fixing threaded portion 121 and the male threaded portion 122. The flange 123 has a shape corresponding to a dedicated tool. Similar to the first embodiment, at least one of the male threaded portion 122 or the female threaded portion 131 includes the sliding structure 14 serving as a sliding means such that the screw-fitting force of the male threaded portion 122 and the female threaded portion 131 is weaker than the screw-fitting force in the fixing threaded portion 121. In the second embodiment as well, the sliding structure 14 is formed only in the nut 13. The sliding structure 14 includes a fluorine coating. The male screw set 21 is distributed to the market with the nut 13 screw fitted to the male threaded portion 122 at the head of the screw body 12.

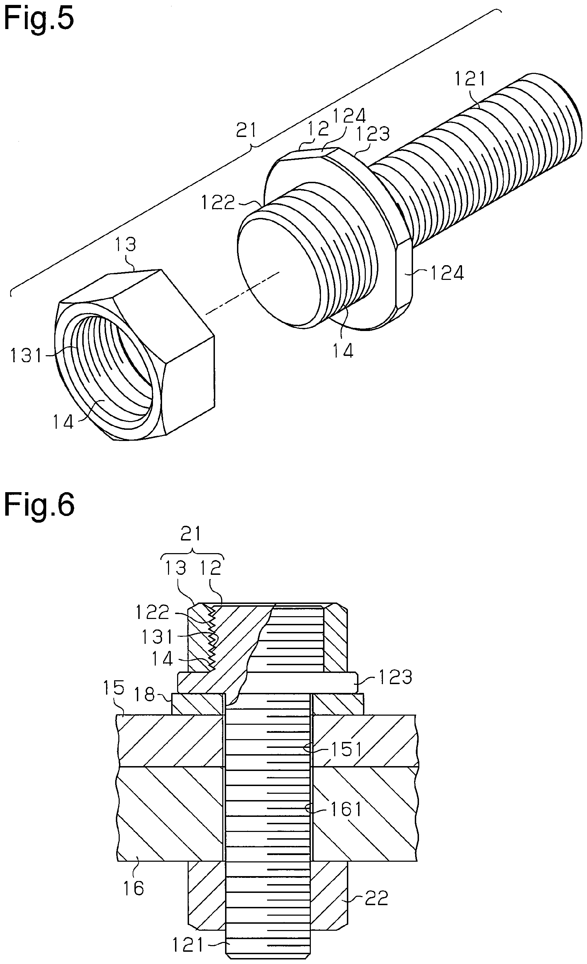

The usage method the male screw set 21 will now be described with reference to Fig. 6.

Fig. 6 shows a state in which the first member 15 is fixed on the second member 16 using the male screw set 21. In this case, the first member 15 is first mounted on the second member 16. Next, the washer 18 is arranged at a position corresponding to the bolt insertion hole 151 of the first member 15. Thereafter, the fixing threaded portion 121 of the male screw set 21 is inserted to the bolt insertion hole 151 of the first member 15 and the bolt insertion hole 161 of the second member 16. The arrangement of the washer 18 and the insertion of the male screw set 21 are carried out above the first member 15. The washer 18 may not be used. The fixing nut 22 is screw fitted to the fixing threaded portion 121 in this state from the lower side of the second member 16. At this stage, the male threaded portion 122 of the screw body 12 and the female threaded portion 131 of the nut 13 are screw fitted in advance. The screw body 12 and the nut 13 of the male screw set 21 are thereby integrated. The general purpose tool is then engaged with the nut 13 to tighten the nut 13, so that the fixing threaded portion 121 of the screw body 12 is tightened to the fixing nut 22. The first member 15 is fixed to the second member 16 in such a manner.

Similar to the first embodiment, even if the general purpose tool is engaged with the nut 13 to loosen the entire male screw set 21 in this state, the nut 13 is merely loosened with respect to the screw body 12, and the tightened state of the fixing threaded portion 121 with respect to the fixing nut 22 is maintained. The male screw set 21 thus cannot be detached from the fixing nut 22. The first member 15 thus can be prevented from being stolen.

When performing maintenance and check on the first member 15, the dedicated tool is to be engaged with the flange 123 of the screw body 12 to rotatably operate the same. The tightening of the fixing threaded portion 121 with respect to the fixing nut 22 thus can be loosened, and the first member 15 can be detached from the second member 16.

Therefore, the second embodiment has effects same as (1) and (2) of the first embodiment.

Each embodiment described above may be modified as below.

In each embodiment described above, the nut 13 configuring the female screw set 11 and the male screw set 21 may be formed to a cap shape.

In the first embodiment, the fixing bolt 17 may be fixed to the second member 16, and the fixing threaded portion 121 of the female screw set 11 may be screw fitted to the fixing bolt 17.

In the second embodiment, a fixing female screw may be formed in the second member 16 in place of the fixing nut 22. In this case, the fixing threaded portion 121 of the male screw set 21 is screw fitted to the fixing female screw of the second member 16.

In each embodiment described above, the sliding means may be configured using a material having low friction coefficient and lubricating property such as molybdenum dioxide, lubricating oil, and the like in place of fluorine coating.

In an example not claimed, the sliding means may be configured by having a clearance between the male threaded portion 122 of the screw body 12 and the female threaded portion 131 of the nut 13 greater than a clearance between the fixing threaded portion 121 of the screw body 12 and the fixing bolt 17 or the fixing nut 22. An adhesive may be applied between the fixing threaded portion 121 of the screw body 12 and the fixing bolt 17 or the fixing nut 22 so that the fixing threaded portion 121 and the fixing bolt 17 or the fixing nut 22 do not easily separate, and the screw fitting force of the male threaded portion 122 and the female threaded portion 131 may be made weaker than the screw fitting force of other portions.

A friction means may be provided to at least one of the flange 123 of the screw body 12 or the washer 18 brought into contact with the flange 123 to apply resistance to the rotation of the screw body 12. If the washer 18 is not arranged, the friction means may be provided to the first member 15. Bumps may be formed or rough surface processing may be performed on the contacting surface of the flange 123, the washer 18, the first member 15, and the like for the friction means. Furthermore, a material of high friction coefficient such as rubber may be arranged on the contacting surface of the flange 123, the washer 18, the first member 15, and the like. According to such configuration, the screw fitting force of the male threaded portion 122 and the female threaded portion 131 becomes weaker than the screw fitting force of other portions.

The number of planar portions 124 for the dedicated tool may be two or less or four or more.

The outer peripheral surface of the flange 123 may be formed with only the planar portion 124 to disable the use of the general purpose tool.

The outer peripheral surface of the flange 123 may be formed to a bumpy form such as a star shape.

The planar portion 124 for the dedicated tool may be omitted from the outer peripheral surface of the flange 123. In this case, the outer peripheral surface of the flange 123 is a circumferential surface.

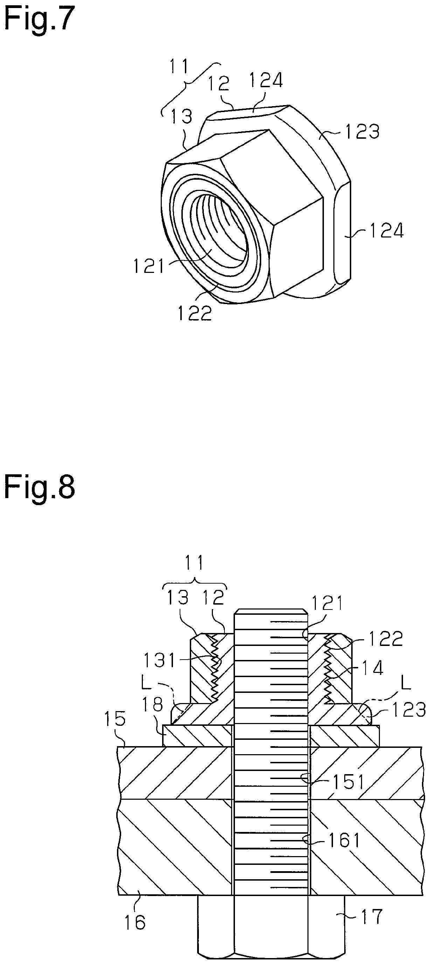

As shown in Figs. 7 and 8, the portion other than the planar portion 124 may be rounded in the outer peripheral surface of the flange 123. In this case, such roundness is provided at the edge portion on the side opposite to the first member 15 of the flange 123. Alternatively, as shown with a chain double dashed line L of Fig. 8, the portion other than the planar portion 124 may be formed to a tapered shape in the outer peripheral surface of the flange 123. Accordingly, the use of the general purpose tool becomes more difficult. Such configurations may be applied to the flange 123 that does not have the planar portion 124.

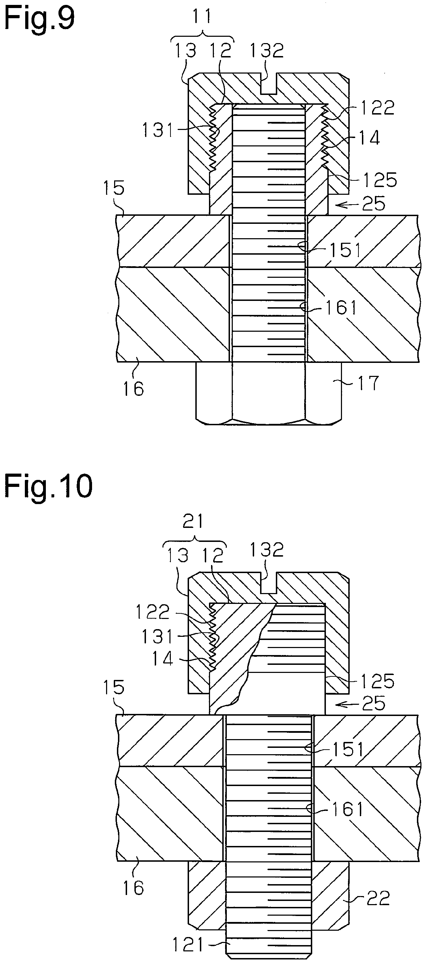

As shown in Figs. 9 and 10, the female screw set 11 may be formed to omit the flange 123 of the screw body 12 and to provide a space 25 between the nut 13 and the first member 15. In this case, a thread-less portion 125 may be formed at the lower part of the male threaded portion 122 or an inner back face of the nut 13 may be brought into contact with the end face of the male threaded portion 122 to ensure the space 25 between the nut 13 and the first member 15. According to such configuration as well, anti-theft is achieved since only the nut 13 is loosened, similar to each embodiment, after the female screw set 11 and the male screw set 21 are assembled. In the configurations of Figs. 9 and 10, the outer peripheral surface of the nut 13 is preferably assumed as a circumferential surface, and a positive or negative groove 132 for a driver or a hexagonal hole for a wrench is preferably formed at the top face of the nut 13.

## Claims

1. A screw set (11, 21) comprising:
a screw body (12) including a fixing threaded portion (121); and
a nut (13) screw fitted to a male threaded portion (122) formed on an outer peripheral surface of the screw body (12); **characterized in that**
at least one of the male threaded portion (122) or a female threaded portion (131) of the nut (13) includes a sliding means (14) such that a screw fitting force of the male threaded portion (122) and the female threaded portion (131) is weaker than a screw fitting force in the fixing threaded portion (121), and
the sliding means (14) includes a fluorine coating or another material having low friction coefficient and lubricating property such as molybdenum dioxide, lubricating oil.

2. The screw set (11, 21) according to claim 1, **characterized in that** the screw body (12) is formed with a flange (123), and the flange (123) has a shape corresponding to a dedicated tool.

3. The screw set (11, 21) according to claim 1 or 2, **characterized in that** the fixing threaded portion (121) of the screw body (12) is a female screw.

4. The screw set (11, 21) according to claim 1 or 2, **characterized in that** the fixing threaded portion (121) of the screw body (12) is a male screw.

## Patentansprüche

1. Schraubenset (11,21), umfassend:
einen Schraubenkörper (12), der einen Befestigungsgewindeabschnitt (121) umfasst; und
eine Mutter (13), die durch Verschrauben auf einen Außengewindeabschnitt (122) aufgesetzt ist, der auf einer äußeren umlaufenden Fläche des Schraubenkörpers (12) gebildet ist; **dadurch gekennzeichnet, dass**
mindestens eines von dem Außengewindeabschnitt (122) oder einem Innengewindeabschnitt (131) der Mutter (13) ein Gleitmittel (14) umfasst, derart, dass eine Schraubenaufsetzungskraft des Außengewindeabschnitts (122) und des Innengewindeabschnitts (131) schwächer als eine Schraubenaufsetzungskraft in dem Befestigungsgewindeabschnitt (121) ist; und
das Gleitmittel (14) eine Fluorbeschichtung oder ein anderes Material umfasst, das einen niedrigen Reibungskoeffizienten und eine Schmiereigenschaft aufweist, wie beispielsweise Molybdändioxid, Schmieröl.

2. Schraubenset (11, 21) nach Anspruch 1, **dadurch gekennzeichnet, dass** der Schraubenkörper (12) mit einem Flansch (123) gebildet ist und der Flansch (123) eine Form aufweist, die einem dedizierten Werkzeug entspricht.

3. Schraubenset (11,21) nach Anspruch 1 oder 2, **dadurch gekennzeichnet, dass** der Befestigungsgewindeabschnitt (121) des Schraubenkörpers (12) eine Innenschraube ist.

4. Schraubenset (11,21) nach Anspruch 1 oder 2, **dadurch gekennzeichnet, dass** der Befestigungsgewindeabschnitt (121) des Schraubenkörpers (12) eine Außenschraube ist.

## Revendications

1. Ensemble vis (11,21) comprenant :
un corps de vis (12) comprenant une portion filetée de fixation (121) ; et
un écrou (13) vissé sur une portion filetée mâle (122) formée sur une surface périphérique extérieure du corps de vis (12) ; **caractérisé en ce que**
au moins l'une de la portion filetée mâle (122) ou d'une portion filetée femelle (131) de l'écrou (13) comprend un moyen coulissant (14) de sorte qu'une force de vissage de la portion filetée mâle (122) et de la portion filetée femelle (131) soit inférieure à une force de vissage de la portion filetée de fixation (121), et
le moyen coulissant (14) comprend un revêtement de fluor ou un autre matériau présentant un faible coefficient de friction et une propriété de lubrification comme du dioxyde de molybdène ou de l'huile de lubrification.

2. Ensemble vis (11,21) selon la revendication 1, **caractérisé en ce que** le corps de vis (12) est formé avec une bride (123), et la bride (123) présente une forme correspondant à un outil dédié.

3. Ensemble vis (11, 21) selon la revendication 1 ou 2, **caractérisé en ce que** la portion filetée de fixation (121) du corps de vis (12) est une vis femelle.

4. Ensemble vis (11, 21) selon la revendication 1 ou 2, **caractérisé en ce que** la portion filetée de fixation (121) du corps de vis (12) est une vis mâle.
